# EUROPEAN PATENT APPLICATION

(11) **EP 1 548 920 A1**
(43) Date of publication of application: **29.06.2005**
(21) Application number: 03766415.8
(22) Date of filing: 02.06.2003
(51) Int. Cl.: H02K 57/00

(54) **REDUCED-CONSUMPTION DYNAMIC MAGNETIC MOTOR**

(30) Priority: 30.07.2002 ES 200201790
(71) Applicant: Advanced Dynamics, S.A., 28006 Madrid (ES)
(72) Inventor: BARCELO RICO-AVELLO, Gabriel, E-28006 Madrid (ES)
(74) Representative: Irache Pereira Tona, Maria
(86) International application number: PCT/ES2003/000266
(87) International publication number: WO 2004/013948

(57) **Abstract**

A reduced-consumption dynamic magnetic motor comprising a circular truncated-cone-shaped body (2). The upper surface of said body comprises a boss and peripheral flange (5). According to the invention, a plastic rotor (3) moves over the surface or the above mentioned body, said rotor being provided internally with a magnet (4). Moreover, the lower part of the body (2) comprises an electromagnet (7), a battery (6) and a transistor (13).

## Description

### OBJECT OF THE INVENTION

The present specification refers to a utility model application relating to a direct current and brushless reduced consumption dynamic magnetic motor, with a motor with variable support, which is based on the application of the Dynamic Interaction Theory, together with electromagnetic induction.

The invention constituting the motor has as an essential feature having reduced consumption and having very few constructive elements, having an electromagnet provided with an automatic pulse actuation device, such that the metal disc will also be pulse actuated, resulting in obtaining a very low consumption.

### FIELD OF THE INVENTION

This invention is applicable within the industry dedicated to the manufacture of dynamic magnetic motors.

### BACKGROUND OF THE INVENTION

The applicant is not aware of the current existence of an invention having the features described in this specification.

### DESCRIPTION OF THE INVENTION

The reduced consumption dynamic magnetic motor object of the invention is constituted of a defined surface manufactured in a plastic material, not being completely horizontal, since it will have a shape approximating a cone frustum or cup, incorporating a slight central bulge.

This surface is defined by a perimetral rim for the purpose of demarcating the movement area of the rotor, also having a spinning top shaped rotor provided with a disc or flywheel in its central magnetized iron portion located transversally to the axis of revolution, the rest of the rotor will be manufactured in plastic material, and the rotor will rotate about its main shaft perpendicularly to the surface of the cup.

A coil with two winding turns around a core manufactured from a steel pipe has been arranged in the lower portion of the cup, and there is a transistor and direct current power source in the circuit, which could be a common battery for power supply for low amperage motors.

Once the rotor rotating about its main shaft is running, the magnet will generate an electromagnetic field in the circuit of the coil, which will amplify the magnetic field created by the spinning top.

The battery, or any other direct current source, will maintain the electromagnetic field generated by the coil, which will repel the magnetized disc of the rotor, generating a kinetic energy power supply in this rotor due to the effect of the resulting dynamic interaction according to the Dynamic Interaction Theory.

The coil thus supplies electromagnetic energy coming from the electrical power source which the rotor converts into kinetic energy with which losses due to friction can be overcome and its rotating speed increased.

The electromagnet of the coil will generate a magnetic torque that will act on the poles of the magnetized disc of the rotor, generating a dynamic interaction torque perpendicular to the previous one, which will maintain the rotor dynamics.

The transistor acts as a simple switch such that when the spinning top stops, the motor shuts off and the power supply is cut off with the subsequent savings.

As the spinning top moves along the concave surface, the motor shuts off and starts up according to whether the spinning top exits or enters the small electromagnetic field generated by the coil and which is located at the center of the base.

As a result of this system, energy consumption is very limited and, in which case, the duration of a battery will be very long.

### DESCRIPTION OF THE DRAWINGS

To complement the description being made and for the purpose of aiding to better understand the features of the invention, two sheets of drawings are attached to the present specification as an integral part thereof in which the following is represented with an illustrative and non-limiting character:

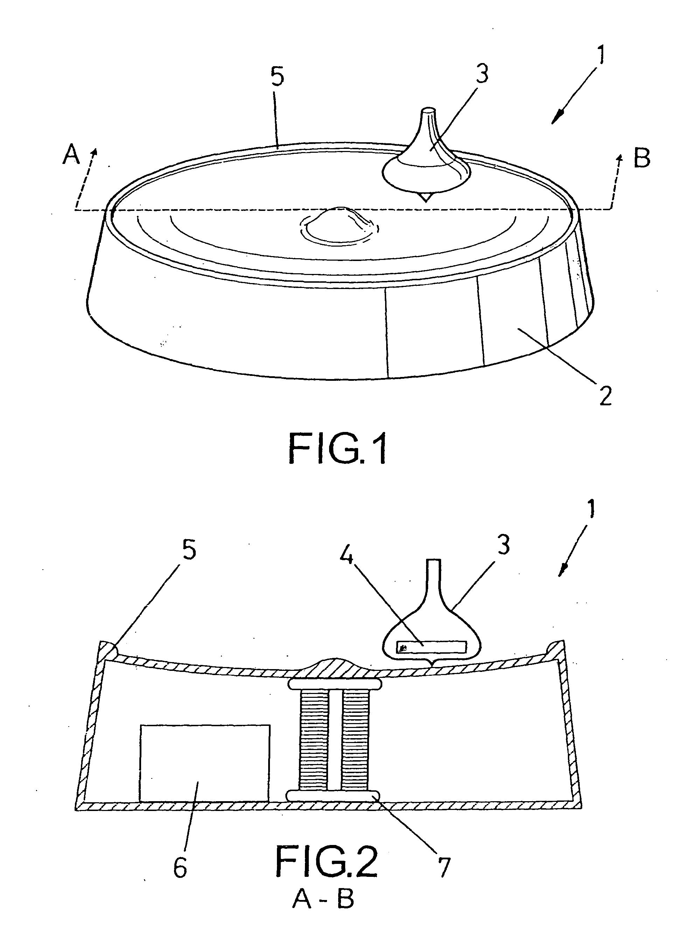

Figure 1 represents a perspective view of the object of the invention, corresponding to a low consumption dynamic magnetic motor.
Figure 2 shows a sectional view along the A-B line of the object represented in Figure 1.
Figure 3 finally corresponds to a functional diagram view.

### PREFERRED EMBODIMENT OF THE INVENTION

In view of these figures, it can be observed how the low consumption dynamic magnetic motor (1) is made up of a circular body (2) adopting a configuration approximating a cone frustum, provided with a slight central bulge and provided with a perimetral rim (5) in the upper portion for the purpose of preventing a spinning top (3), manufactured in plastic material and provided with a magnet (4) and located in its inner area, from leaving to the outside, having a battery (6) in the inner portion and a coil (7) with two winding turns around a steel pipe core.

A transistor (13) acting as a switch has been provided in the circuit.

The rotor can be mobilized with a conventional electric motor, with a mechanical arm for starting it up again in the event of an accidental shut off, and this dynamic motor can be provided with blades around its main shaft for the purpose of allowing its actuation as a fan or cooling system.

The invention has low voltage power supply (10), as shown in Figure 3, the power supply being direct current and a conventional battery would be enough for low amperage motors.

When the rotor (3) is in motion rotating on its main shaft, the magnet (4) generates an electromagnetic field in the circuit (11) of the coil (7), which will amplify the magnetic field created by the rotor (3).

The battery, or any direct current power source, will maintain the electromagnetic field generated by the coil (7), which will repel the magnetized disc (4) of the rotor (3), generating a kinetic energy power supply in this rotor.

The coil (7) thus supplies electromagnetic energy coming from the electrical power supply source (10) which the rotor converts into kinetic energy with which it can overcome losses due to friction and increase its rotating speed.

The electromagnet of the coil (7) will generate a magnetic torque which will act on the poles of the magnetized disc of the rotor, generating a dynamic interaction torque perpendicular to the previous one, which will maintain the rotor dynamics.

As previously stated, the transistor (13) acts as a simple switch such that when the rotor stops (3), the motor shuts off and the power supply (10) is cut off, with the subsequent savings.

According to Figure 2, it can be observed that when one of the poles of the magnet (4), for example the south pole, approaches the coil, current is generated in the outer winding (11) with a direction such that it makes the base of the transistor become positive, causing an emitter-collector current flowing throughout the winding (12).

The connections must be made such that the current (12) flows in a direction opposite to that of (11), and the reason resides in Lenz's Law, i.e. the current induced in (11) will generate a new current in (12) of the opposite direction to that of (11).

The effects of the influence of the magnetic field in (11) in relation to that of (12) are of no interest in this case, since these magnetic fields are weak in comparison to that of the electromagnet (7).

The rotor (3) adopting the form of a spinning top manufactured in plastic material can have any dimension according to the power which is desired, its being an NPN or PNP circuit being of no consequence, since these simply affect polarity and directions, with no change in the final result.

The windings of the coil will be of very small cable section and with about 4,000 winding turns surrounding a cylindrical iron pipe.

The rotating speed of the rotor may be widely variable but no less than 3,000 revolutions per minute.

## Claims

1. A reduced consumption dynamic magnetic motor, either provided with blades in its rotor or not, having conventional starting means on the rotor and optionally provided with a mechanical arm for its automatic recovery in the event of an accidental shut off (1), possibly having a protective perimetral wire mesh cage, **characterized by** being made up of a body adopting the shape of a cup or cone frustum (2), provided with a slight central bulge, the upper surface having a perimetral rim (5) limiting the movement area of the rotor (3), which can adopt a spinning top shape and internally incorporating a disc or flywheel in its central portion, configured as magnetized iron (4) located transversally to the axis of revolution, the rotor being manufactured in plastic material, rotating on its main shaft and perpendicularly to the surface of the cup (2).

2. A reduced consumption dynamic magnetic motor according to the first claim, **characterized in that** provided inside the cup (2) is the incorporation of a cup (7) with two winding turns around a steel pipe core, incorporating a transistor (13) and a direct current power supply (10), as well as a battery (6).

3. A reduced consumption dynamic magnetic motor according to the previous claims, **characterized in that** the motor shuts off and starts up according to whether the rotor (3) enters or exits the electromagnetic field generated by the coil (7) located in the center of the base of the body (2), the transistor acting as a switch.

4. A reduced consumption dynamic magnetic motor according to the previous claims, **characterized in that** the windings of the coil (7) are 4,000 winding turns of reduced section surrounding a cylindrical pipe.
